# FASCICULE DE BREVET EUROPEEN

(11) **EP 0 959 424 B1**
(45) Date de publication et mention de la délivrance du brevet: **09.12.2009**
(21) Numéro de dépôt: 99410068.3
(22) Date de dépôt: 19.05.1999
(51) Int. Cl.: G06K 7/00

(54) **Terminal de paiement portable pour cartes à puce et cartes magnétiques**
Tragbares Verkaufsstellenendgerät für Chipkarten und Magnetkarten
Portable point-of-sale terminal for IC cards and magnetic cards

(30) Priorité: 20.05.1998 FR 9806553
(43) Date de publication de la demande: 24.11.1999
(73) Titulaire: Ingenico France, 92200 Neuilly Sur Seine (FR)
(72) Inventeur: Demange, Fabien, 07500 Guilherand-Granges (FR)
(74) Mandataire: de Beaumont, Michel

(56) Documents cités:
- EP-A- 0 678 825
- FR-A- 2 733 334

## Description

La présente invention concerne un terminal de paiement portable prévu pour accepter des paiements par carte magnétique et par carte à puce.

Les terminaux de paiement portables permettent à un client, par exemple dans un restaurant, de ne pas se déplacer jusqu'à une caisse pour effectuer un paiement par carte bancaire. Les terminaux actuels sont prévus pour accepter des paiements par carte magnétique et par carte à puce et doivent donc intégrer deux dispositifs de lecture distincts.

Dans un terminal classique, le dispositif de lecture de carte à puce est généralement situé à l'avant afin de recevoir la carte à puce par une fente ouverte sur la face avant du terminal, tandis que le dispositif de lecture de carte magnétique est souvent situé à l'arrière afin de recevoir la carte par glissement latéral dans une fente parallèle à la face arrière du terminal.

La demande de brevet français FR 2 733 334 décrit un terminal de paiement polyvalent comportant au moins un lecteur de carte bancaire ou accréditive et au moins un moyen pour l'édition et/ou la lecture de chèques.

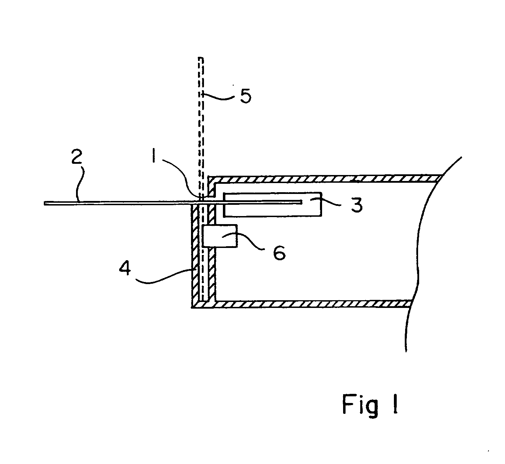

La figure 1 représente schématiquement la partie avant d'un terminal portable classique, tel que commercialisé par la société SAGEM. Les dispositifs de lecture magnétique et de carte à puce sont situés tous deux à l'avant du terminal. Une fente de lecture 1 de carte à puce débouche sur la face avant du terminal à proximité de la face supérieure du terminal. Cette fente 1 est destinée à recevoir une carte à puce 2 par insertion horizontale.

Une fente de lecture 4 de carte magnétique est disposée au niveau de la face avant du terminal, parallèlement à celle-ci. Cette fente est délimitée à l'avant par une paroi partant de la face inférieure du terminal et s'arrêtant au niveau de la fente 1 pour les cartes à puce. Une carte magnétique 5 est représentée en position de lecture dans la fente 4. Une tête magnétique 6 est disposée à la hauteur de la piste magnétique de la carte 5 lorsque celle-ci est en appui, comme cela est représenté, au fond de la fente 4.

La position de la tête magnétique 6, et donc la position du fond de la fente 4 est déterminée par l'encombrement en hauteur du dispositif de lecture de carte à puce 3. En outre, la distance entre la fente 1 et la face supérieure du terminal est également déterminée par l'encombrement en hauteur du dispositif 3.

Si l'on souhaite diminuer l'encombrement en hauteur du terminal, le seul moyen, comme cela est représenté, est de faire arriver le fond de la fente 4 au niveau de la face inférieure du terminal. Alors, comme les cartes magnétiques 5 doivent coulisser latéralement au travers de la fente 4, la paroi de délimitation avant de la fente 4 n'est reliée au reste du terminal que par une faible épaisseur de matière, ce qui rend le terminal particulièrement fragile.

Par ailleurs, les deux fentes de lecture 1 et 4 débouchant au même niveau, l'utilisateur risque de confondre les fonctions de ces deux fentes et d'introduire une carte dans la mauvaise fente.

Un objet de la présente invention est de prévoir un terminal de paiement portable pour cartes magnétiques et cartes à puce qui soit peu encombrant et pratique à utiliser.

Pour atteindre cet objet, la présente invention prévoit un terminal de paiement portable comprenant un moyen de lecture de carte magnétique et un moyen de lecture de carte à puce disposés à l'avant du terminal pour recevoir des cartes respectives dans des fentes de lecture à plans perpendiculaires, la fente de lecture de carte à puce étant ouverte sur la face avant du terminal, et la fente de lecture de carte magnétique étant ouverte sur la face supérieure du terminal. Le plan de la fente de lecture de carte à puce est situé en dessous du moyen de lecture de carte magnétique.

Selon un mode de réalisation de la présente invention, le fond de la fente de lecture de carte magnétique est situé au niveau du plan de la fente de lecture de carte à puce.

Selon un mode de réalisation de la présente invention, le terminal comprend un boîtier constitué d'une coque inférieure et d'une coque supérieure, la fente de lecture de carte à puce étant située au niveau de l'interface entre les coques supérieure et inférieure, et la fente de lecture de carte magnétique étant définie par une face avant de la coque supérieure et une paroi montant depuis la partie avant de la coque inférieure.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, précédemment décrite, représente schématiquement une partie d'un terminal portable classique prévu pour recevoir une carte magnétique et une carte à puce à l'avant du terminal ;
la figure 2 représente une vue en perspective d'un mode de réalisation de terminal portable selon l'invention, recevant une carte à puce ;
la figure 3 représente le terminal portable de la figure 2, recevant une carte magnétique ; et
la figure 4 représente une vue latérale en coupe du terminal de la figure 2.

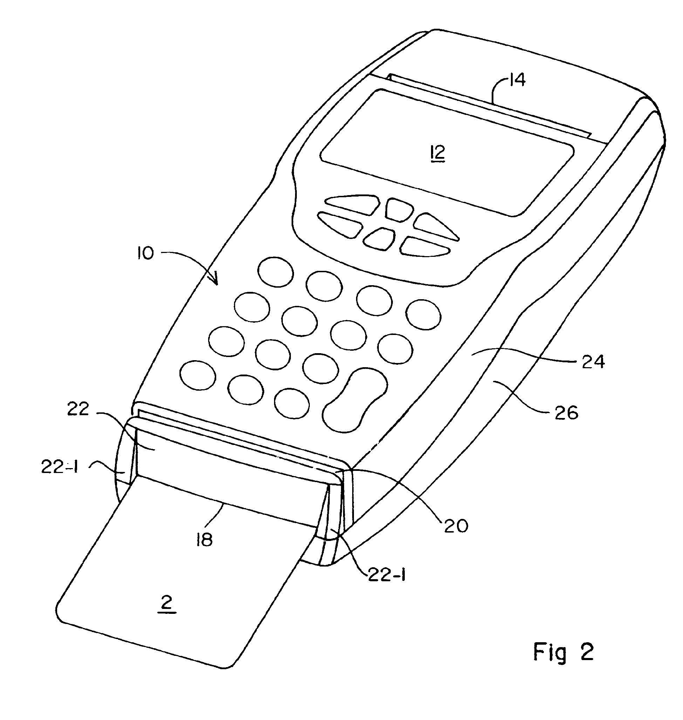

A la figure 2, un mode de réalisation de terminal de paiement portable comporte un boîtier plat et allongé muni d'un clavier 10 et d'un affichage 12 sur sa face supérieure. La partie arrière du terminal est prévue pour loger un rouleau de papier pour l'édition de facturettes, ces facturettes sortant par une fente 14 de la face supérieure du boîtier.

Le terminal comporte, à sa partie avant, un dispositif de lecture de carte à puce. Comme cela est représenté, une carte à puce 2 est insérée horizontalement dans le dispositif de lecture par une fente 18 ouverte sur la face avant du boîtier.

Selon l'invention, la fente 18 de lecture de carte à puce est située à proximité de la face inférieure du terminal au lieu d'être située, comme dans le terminal classique de la figure 1, à proximité de la face supérieure. Une fente de lecture 20 de carte magnétique est, comme dans le terminal classique de la figure 1, disposée au niveau de la face avant du terminal, parallèlement à celle-ci.

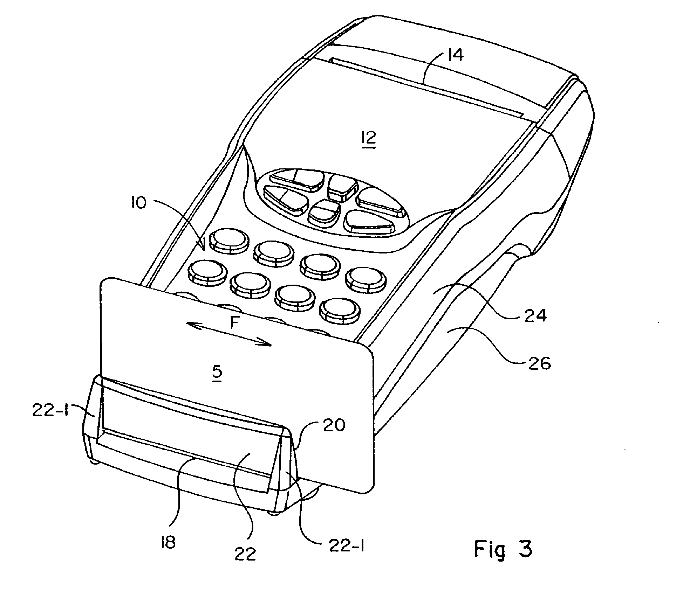

La figure 3 représente le terminal de la figure 2 recevant une carte magnétique 22 dans la fente 20. La fente 20 est ouverte sur les parois latérales du terminal et sur sa face supérieure. Un utilisateur entraîne la carte manuellement dans un déplacement transversal indiqué par une flèche F.

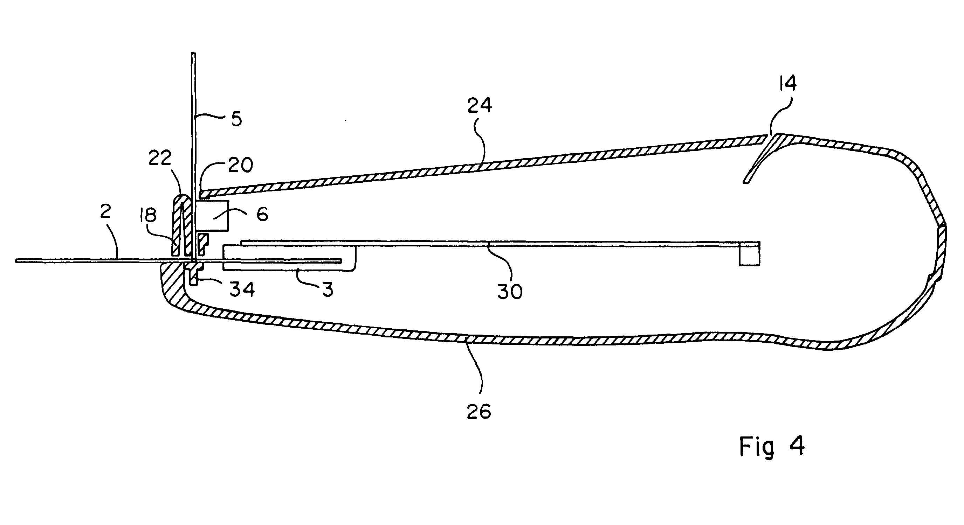

La figure 4 représente une vue en coupe latérale du terminal de la figure 2, une carte à puce 2 et une carte magnétique 5 étant insérées dans leurs fentes respectives 18 et 20.

Comme on le remarque dans cette figure, une tête magnétique 6 pour les cartes magnétiques 5 peut être située au plus près de la face supérieure du terminal. Le dispositif de lecture 3 des cartes à puce est logé, comme cela est représenté, entre la tête magnétique 6 et le fond de la fente 20, ce qui permet d'obtenir un encombrement en hauteur égal à la distance séparant le fond de la fente 20 de la partie supérieure de la tête magnétique 6.

En pratique, on préfère écarter le fond de la fente 20 de la face inférieure du terminal. On augmente alors la rigidité de la partie reliant la paroi 22, délimitant la partie avant de la fente 20, au reste du terminal.

De préférence, comme cela est représenté, la fente 20 est arrêtée au niveau du plan selon lequel sont introduites les cartes à puce dans le terminal par la fente 18. En effet, le boîtier du terminal est généralement constitué d'une coque supérieure 24 et d'une coque inférieure 26, la fente 18 pour les cartes à puce étant située au niveau de l'interface entre les deux coques. Alors, comme cela est représenté, la coque inférieure 26 est continue au niveau de la fente 20 et ne présente aucune zone fragilisée à ce niveau.

La carte à puce 2 est guidée par sa face inférieure sur la coque inférieure 26 vers le dispositif de lecture de puce 3 solidaire d'un circuit imprimé 30. Dans sa position de lecture, la carte 2 est en appui au fond du dispositif 3.

La carte magnétique 5 est en appui sur le plan de guidage de la carte à puce 2, ce plan de guidage étant éventuellement renforcé localement par un élément transverse 34.

On s'aperçoit que la carte magnétique 5 intercepte la trajectoire de la carte à puce 2. Toutefois, ceci n'est pas gênant car on n'utilise jamais deux cartes en même temps.

La fente 20 pour les cartes magnétiques est définie par la face avant de la coque supérieure 24 et la paroi 22 qui prolonge la face avant de la coque inférieure 26 pour constituer la face avant du terminal. La paroi 22, qui est traversée par les cartes à puce 2, est munie à ses extrémités de deux montants 22-1 (figure 2) qui définissent latéralement la fente 18. La paroi 22, la face avant de la coque supérieure 24, et l'élément transverse 34 pourront faire partie d'une même pièce qui est emprisonnée entre les deux coques 24 et 26 et qui supporte le dispositif de lecture magnétique.

Comme cela est représenté dans les figures, la paroi 22 est légèrement en retrait par rapport à la face avant de la coque inférieure 26, ce qui facilite l'insertion des cartes à puce 2 dans la fente 18.

## Revendications

1. Terminal de paiement portable comprenant un moyen (6) de lecture de carte magnétique et un moyen (3) de lecture de carte à puce disposés à l'avant du terminal pour recevoir des cartes respectives (5, 2) dans des fentes de lecture (20, 18), la fente de lecture (18) dé carte à puce étant ouverte sur la face avant du terminal, et la fente de lecture (20) de carte magnétique étant ouverte sur la face supérieure du terminal, **caractérisé en ce que** la fente de lecture (18) de carte à puce et la fente de lecture (20) de carte magnétique sont situées dans des plans perpendiculaires,
**en ce que** le plan de la fente de lecture (18) de carte à puce est situé en dessous du moyen de lecture de carte magnétique,
**en ce que** le fond de la fente de lecture (20) de carte magnétique est situé au niveau du plan de la fente de lecture (18) de carte à puce, et
**en ce qu'**il comprend un boîtier constitué d'une coque inférieure (26) et d'une coque supérieure (24), la fente de lecture (18) de carte à puce étant située au niveau de l'interface entre les coques supérieure et inférieure, et la fente de lecture (20) de carte magnétique étant définie par une face avant de la coque supérieure et une paroi (22) montant depuis la partie avant de la coque inférieure (26).

## Claims

1. A portable payment terminal comprising magnetic card reading means (6) and chip card reading means (3) arranged at the front of the terminal to receive respective cards (5, 2) in reading slots (20, 18), the chip card reading slot (18) being open on the front surface of the terminal, and the magnetic card reading slot (20) being open on the upper surface of the terminal, **characterized in that** the chip card reading slot (18) and the magnetic card reading slot (20) are located in perpendicular planes,
**in that** the plane of the chip card reading slot (18) is located under the magnetic card reading means,
**in that** the bottom of the magnetic card reading slot (20) is located at the level of the plane of the chip card reading slot (18), and
**in that** it comprises a package formed of a lower shell (26) and of an upper shell (24), the chip card reading slot (18) being located at the level of the interface between the upper and lower shells, and the magnetic card reading slot (20) being defined by a front surface of the upper shell and a wall (22) extending upwards from the front part of the lower shell (26).

## Patentansprüche

1. Ein tragbares Verkaufsstellenendgerät, welches Magnetkartenlesemittel (6) und Chipkartenlesemittel (3) angeordnet an der Vorderseite des Geräts aufweist, um die entsprechenden Karten (5, 2) in Leseschlitzen (20, 18) aufzunehmen, wobei der Chipkartenleseschlitz (18) an der vorderen Oberfläche bzw. Vorderseite des Geräts offen ist und der Magnetkartenleseschlitz (20) an der oberen Oberfläche bzw. Oberseite des Geräts offen ist, **dadurch gekennzeichnet, dass** der Chipkartenleseschlitz (18) und der Magnetkartenleseschlitz (20) in senkrechten Ebenen angeordnet sind,
dass die Ebene des Chipartenleseschlitzes (18) unter den Magnetkartenlesemitteln angeordnet,
dass der Boden des Magnetkartenleseschlitzes (20) auf dem Niveau der Ebene des Chipkartenleseschlitzes (18) angeordnet ist und
dass es ein aus einer unteren Schale (26) und einer oberen Schale (24) gebildetes Gehäuse aufweist, wobei der Chipkartenleseschlitz (18) auf dem Niveau der Interface- bzw. Berührungsstelle zwischen den oberen und unteren Schalen angeordnet ist und wobei der Magnetkartenleseschlitz (20) durch eine vordere Oberfläche bzw. Vorderseite der oberen Schale und einer Wand (22) gebildet wird, die sich nach oben von dem vorderen Teil der unteren Schale (26) erstreckt.
